# EUROPÄISCHE PATENTSCHRIFT

(11) **EP 0 714 900 B1**
(45) Veröffentlichungstag und Bekanntmachung des Hinweises auf die Patenterteilung: **05.12.2001**
(21) Anmeldenummer: 95116014.2
(22) Anmeldetag: 11.10.1995
(51) Int. Cl.: C07F 7/12, C07F 7/14

(54) **Verfahren zur Herstellung von Alkylhydrogenchlorsilanen**
Process for the preparation of alkylhydrohalosilanes
Procédé pour la préparation de alkylhydrohalosilanes

(30) Priorität: 01.12.1994 DE 4442753
(43) Veröffentlichungstag der Anmeldung: 05.06.1996
(73) Patentinhaber: Degussa AG, 40474 Düsseldorf (DE)
(72) Erfinder: Schuler, Joachim, Dr., D-45772 Marl (DE)

(56) Entgegenhaltungen:
- EP-A- 0 348 902
- US-A- 2 595 620
- US-A- 3 100 788
- US-A- 5 015 624
- CHEMICAL ABSTRACTS, vol. 119, no. 7, 16.August 1993 Columbus, Ohio, US; abstract no. 72830u, VERENINOV, G.M. ET AL.: "SYNTHESIS OF HYDROGEN-CONTAINING CHLORO- AND ORGANOCHLOROSILANES" XP002012965 & IZOBRETENIYA, Nr. 37, Seite 91

## Beschreibung

Die Erfindung betrifft ein Verfahren zur Herstellung von Alkylhydrogenchlorsilanen der allgemeinen Formel I

R₍₄₋ₙ₋ₘ₎ Si Clₙ Hₘ (I),

wobei m gleich 1 oder 2 und n gleich 1 oder 2 und m + n ≤ 3 ist und
R eine Alkylgruppe mit 1 bis 5 Kohlenstoffatomen bedeutet.

Die Darstellung der Alkanyl-, Alkenyl- und Alkinylchlorsilane gelingt durch die Hydrosilylierung der Doppel- bzw. Dreifachbindung der entsprechenden ungesättigten Kohlenwasserstoffe. So finden zum Beispiel Dimethylchlorsilan (DMCS) und Methyldichlorsilan (MDCS) über die Hydrosilylierungsreaktion vielfache Anwendung bei der Synthese von Organochlorsilanen.

Es ist bekannt, diese Verbindungen als Nebenprodukte der Rochow-Synthese nach Abtrennung von dem Hauptprodukt Dimethyldichlorsilan (DMDCS) zu gewinnen [K. Schnurrbusch, Ullmanns Encyklopädie der technischen Chemie, Band 15, Urban & Schwarzenberg-Verlag, S. 748-769 (1964)]. Sie stehen, bedingt durch eine in der Rochow-Synthese angestrebte hohe DMDCS-Selektivität, nicht immer in ausreichendem Maße zur Verfügung.

Durch katalytische Spaltung von Organochlordisilanen, welche im Rückstand der Rochow-Synthese vorliegen, kann zusätzlich DMCS synthetisiert werden [M. Wick, G. Kreis, F.-H. Kreuzer, Ullmanns Encyklopädie der technischen Chemie, Band 21, 4. Auflage, Verlag Chemie, S. 485-508 (1982)].

Eine gezielte Synthese von DMCS aus DMDCS gelingt auch durch die Reduktion von DMDCS mit Metallhydriden, so z. B. mit LiH [21.06.89-JP-158938], NaH/NaBH₄ [02.02.77-JA-010373], CaH₂, (TiH₂)ₙ [J. Organomet. Chem. 206 (3), 279-286 (1981)]. Bei der Reduktion von DMDCS mit LiH in einer LiCl/KCl-Schmelze bei 355 °C bis 470 °C erhält man eine Ausbeute von 8 % bis 17 % DMCS [21.06.89-JP-158938]. Bei dieser Reaktionsführung fallen aufgrund der Stöchiometrie der Reaktion jedoch große Mengen LiCl pro Einheit des gebildeten DMCS an. Die Reduktion von DMDCS mit NaBH₄/NaH in Hexamethylphosphorsäureamid als Lösemittel bei Temperaturen von 40 °C bis 80 °C führt zu einer DMCS-Ausbeute von 71 % [02.02.77-JA-010373]. Neben dem Einsatz eines krebserzeugenden Gefahrstoffes als Lösemittel hat dieser Syntheseweg den Nachteil, daß große Mengen NaCI pro Einheit des gebildeten DMCS anfallen.

Des weiteren läßt sich MDCS in einer Grignard-Reaktion zu DMCS umsetzen [K Schnurrbusch, Ullmanns Encyklopädie der technischen Chemie, Band 15, Urban & Schwarenberg-Verlag, S. 748-769 (1964)].

Die beschriebenen direkten Synthesewege führen durchweg zu einem hohen Zwangsanfall an anorganischen Chloriden, welche deponiert oder aufgearbeitet werden müssen.

Ferner offenbart US 2 595 620, daß Siliciumtetrachlorid oder Alkyltrichlorsilane reduziert werden können, indem Wasserstoff und der Dampf besagter Siliciumverbindungen bei mindestens 400 °C mit Silicium in Kontakt gebracht werden, wobei das Silicium Nickel oder Kupfer als Katalysator enthält.

Der vorliegenden Erfindung lag daher die Aufgabe zugrunde, Alkylhydrogenchlorsilane unter weitgehender Vermeidung eines Zwangsanfalls von zu entsorgenden Reststoffen herzustellen.

Überraschenderweise wurde gefunden, daß durch katalytische Umsetzung von Alkylchlorsilanen der allgemeinen Formel II mit Wasserstoff Alkylhydrogenchlorsilane der allgemeinen Formel I auf einfache und wirtschaftliche Weise hergestellt werden können. Die Erfindung ist um so überraschender, da aus Berechnungen auf der Basis neuester thermodynamischer Daten hervorgeht, daß das Gleichgewicht der Reaktion von DMDCS und Wasserstoff zu DMCS und HCI praktisch völlig auf der Seite der Ausgangsstoffe liegt [M. D. Allendorf und C. F. Melius, J. Phys. Chem. 97, 720-728 (1993)].

Beispielsweise wird die katalytische Umsetzung von DMDCS mit Wasserstoff zu DMCS an heterogenen Katalysatoren, im allgemeinen an gängigen Hydrierkatalysatoren mit mindestens einem Metall der 8. Nebengruppe des Periodensystems der Elemente, durchgeführt. Ferner wird hierbei auch die Bildung von MDCS beobachtet. Als weiteres verwertbares Nebenprodukt wird Trimethylchlorsilan (TMCS) gefunden.

Aus dem so erhältlichen Reaktionsprodukt der katalytischen Umsetzung können die Alkylhydrogenchlorsilane der allgemeinen Formel I auch in reiner Form gewonnen werden. Vorzugsweise erhält man die reinen Alkylhydrogenchlorsilane durch destillatives Abtrennen aus dem Reaktionsprodukt.

So können die Alkylhydrogenchlorsilane der allgemeinen Formel 1, insbesonders das erfindungsgemäß erhältliche Reaktionsprodukt der katalytischen Umsetzung, das die Alkylhydrogenchlorsilane der allgemeinen Formel I enthält, z. B. für die Umsetzung mit einem Alken, einer Alkenyl-Verbindung, einem Alkin, einer Alkinyl-Verbindung undloder organischen Verbindungen, die konjugierte und/oder kumulierte Doppelbindungen undloder Dreifachbindungen enthalten, verwendet werden. So entstehen z. B. bei der Umsetzung der Alkylhydrogenchlorsilane der allgemeinen Formel I mit Acetylen die entsprechenden Vinylalkylchlorsilane, die ggf. destillativ getrennt oder nachgereinigt werden können. Für solche Hydrosilylierungen können auch Katalysatoren, geeigneterweise Edelmetallkatalysatoren, insbesondere homogene Katalysatoren, beispielsweise Hexachloroplatinsäure [DE-AS 12 32 580, US 3 793 358], eingesetzt werden.

Gegenstand der vorliegenden Erfindung ist ein Verfahren zur Herstellung von Alkylhydrogenchlorsilanen der allgemeinen Formel I

R₍₄₋ₙ₋ₘ₎ Si Clₙ Hₘ (I),

wobei m gleich 1 oder 2 und n gleich 1 oder 2 und m + n ≤ 3 ist und R eine Alkylgruppe mit 1 bis 5 Kohlenstoffatomen bedeutet,
in dem Alkylchlorsilane der allgemeinen Formel II

R₍₄₋ₚ₎ Si Clₚ (II),

wobei p gleich 1 oder 2 oder 3 ist,
mit Wasserstoff in Gegenwart eines Katalysators umgesetzt und die Alkylhydrogenchlorsilane aus dem Reaktionsprodukt gewonnen werden, das dadurch gekennzeichnet ist, daß man die Alkylchlorsilane der allgemeinen Formel II an mindestens einem Metall aus der Reihe Eisen, Kobalt, Ruthenium, Rhodium, Palladium, Osmium, Iridium und Platin als geträgertem Katalysator mit Wasserstoff umsetzt.

Im allgemeinen führt man das erfindungsgemäße Verfahren zur Herstellung von Alkylhydrogenchlorsilanen der allgemeinen Formel I so durch, daß die Alkylchlorsilane der allgemeinen Formel II vorzugsweise in der Gasphase katalytisch mit Wasserstoff umgesetzt werden. Bevorzugt werden die Alkylchlorsilane der allgemeinen Formel II bei Temperaturen von 100 bis 600 °C, besonders bevorzugt bei Temperaturen von 400 bis 500 °C, katalytisch mit Wasserstoff umgesetzt. Die Alkylchlorsilane der allgemeinen Formel II werden auch vorzugsweise bei Drücken von 1 bis 50 bar abs., besonders vorzugsweise bei Drücken von 5 bis 10 bar abs., katalytisch mit Wasserstoff umgesetzt. Das Molverhältnis von Wasserstoff zu Alkylchlorsilanen der allgemeinen Formel II beträgt bei der Umsetzung vorzugsweise 1 : 1 bis 100 : 1, besonders vorzugweise beträgt das Molverhältnis von Wasserstoff zu Alkylchlorsilanen der allgemeinen Formel II 5 : 1 bis 15 : 1.

Das erfindungsgemäße Verfahren kann in einem Vielrohrreaktor oder einem Festbettreaktor mit und ohne Rückführung kontinuierlich oder auch diskontinuierlich durchgeführt werden. Dabei ist der Katalysator geeigneterweise in einem Katalysatorfestbett angeordnet. Die Raumgeschwindigkeit (GHSV), d. h. das durchgesetzte Gasvolumen an Wasserstoff, bezogen auf das eingesetzte Katalysatorvolumen, liegt bei der Umsetzung geeigneterweise zwischen 10 und 10 000 h⁻¹, besonders bevorzugt werden Raumgeschwindigkeiten zwischen 100 und 1 000 h⁻¹. Gegebenenfalls kann das Reaktionsgemisch mit einem Inertgas verdünnt werden. Es kann aber auch ein Wirbelbettreaktor mit geeigneten Trägerkatalysatoren eingesetzt werden.

Die nach dem erfindungsgemäßen Verfahren hergestellten Alkylhydrogenchlorsilane der allgemeinen Formel I werden vorzugsweise destillativ aus dem Reaktionsprodukt abgetrennt. Das Reaktionsprodukt der erfindungsgemäßen katalytischen Umsetzung von Alkylchlorsilanen der allgemeinen Formel II kann neben den Edukten und den Alkylhydrogenchlorsilanen der allgemeinen Formel I auch andere Organosilane, beispielsweise Trialkylchlorsilane, enthalten. Da die Hauptprodukte im Reaktionsprodukt der erfindungsgemäßen katalytischen Umsetzung von Alkylchlorsilanen der allgemeinen Formel II auch im Reaktionsaustrag der Rochow-Synthese enthalten sind, kann die destillative Aufarbeitung des erfindungsgemäß erhaltenen Reaktionsprodukts auch gemeinsam mit dem zur Dimethyidichlorsilangewinnung der Rochow-Synthese nachgeschalteten üblichen destillativen Aufarbeitungsstufen erfolgen.

Im allgemeinen werden beim erfindungsgemäßen Verfahren die Alkylchlorsilane der allgemeinen Formel II an mindestens einem der besagten Metalle, vorzugsweise Ruthenium und/oder Rhodium und/oder Palladium und/oder Platin, als Katalysator mit Wasserstoff umgesetzt. Geeigneterweise ist der Katalysator auf einen Träger aufgebracht, der vorzugsweise Aktivkohle und/oder Oxide des Aluminiums und/oder des Titans und/oder des Siliziums enthält. Vorzugsweise werden auf den Träger 0,01 bis 10 Gew.-%, besonders vorzugsweise 0,1 bis 6 Gew.-%, ganz besonders vorzugsweise 0,5 bis 5 Gew.-%, an Metall der obengenannten Elemente aufgebracht. Für die Präparation des Katalysators können die gebräuchlichen Verfahren zur Herstellung von Katalysatoren, die mindestens ein Element der 8. Nebengruppe des PSE enthalten, durchgeführt werden. Im allgemeinen werden beim erfindungsgemäßen Verfahren Schüttgutkatalysatoren eingesetzt. Dabei kann der Katalysator auf einen strangförmigen oder röhrenförmigen oder zahnradförmigen oder kugelförmigen oder splittförmigen Träger aufgebracht sein. Es können aber auch wabenförmige Träger oder Katalysatorpakete aus einzelnen Platten, mit z. B. glatter oder gewellter oder netzartiger Struktur, oder Hydrierkatalysatoren auf anderen Trägerformen, zum Beispiel Pulverkatalysatoren, eingesetzt werden.

In einer bevorzugten Ausführungsvariante des erfindungsgemäßen Verfahrens wird Dimethyldichlorsilan katalytisch mit Wasserstoff umgesetzt und das Dimethylchlorsilan und/oder das Methyldichlorsilan aus dem Reaktionsprodukt gewonnen. Das Reaktionsprodukt kann aber auch andere Organosilane, beispielsweise Trimethylchlorsilan, enthalten.

Mit dem erfindungsgemäßen Verfahren kann somit gezielt der Anfall von unerwünschten, zu entsorgenden Nebenprodukten bei der Herstellung von Alkylhydrogenchlorsilanen der allgemeinen Formel I vermieden werden.

Die Erfindung wird anhand der folgenden Beispiele näher erläutert:

### Beispiel 1

Ein Pd/Aktivkohle-Katalysator mit einem Metall-Gehalt von 5 Gew.-% wurde bei einer GHSV von 470 h⁻¹ bei 2 bar abs. und 340 °C mit einem Silan/H₂-Gemisch, das durch Sättigung des Wasserstoffs mit DMDCS bei 30 °C erzeugt wurde, beschickt. Der gefundene DMDCS-Umsatz und die Selektivitäten bezüglich der Hauptprodukte sind in Tabelle 1 aufgeführt.

**Tabelle 1**

| DMDCS-Umsatz % | DMCS-Sel. % | MDCS-Sel. % | TMCS-Sel. % |
|---|---|---|---|
| 5,3 | 36,1 | 21,6 | 37,3 |

### Beispiel 2

Ein Pt/Aktivkohle-Katalysator mit einem Metall-Gehalt von 5 Gew.-% wurde bei einer GHSV von 230 h⁻¹ bei 10 bar abs. und 400 °C mit einem Silan/H₂-Gemisch, das durch Sättigung des Wasserstoffs mit DMDCS bei 30 °C erzeugt wurde, beschickt. Der gefundene DMDCS-Umsatz und die Selektivitäten bezüglich der Hauptprodukte sind in Tabelle 2 aufgeführt.

**Tabelle 2**

| DMDCS-Umsatz % | DMCS-Sel. % | MDCS-Sel. % | TMCS-Sel. % |
|---|---|---|---|
| 3,9 | 40,8 | 52,0 | 5,4 |

### Beispiel 3

Ein Ru/Al₂O₃-Katalysator mit einem Metall-Gehalt von 1 Gew.-% wurde bei einer GHSV von 250 h⁻¹ bei 6 bar abs. und 400 °C mit einem Silan/H₂-Gemisch, das durch Sättigung des Wasserstoffs mit DMDCS bei 30 °C erzeugt wurde, beschickt. Der gefundene DMDCS-Umsatz und die Selektivitäten bezüglich der Hauptprodukte sind in Tabelle 3 aufgeführt.

**Tabelle 3**

| DMDCS-Umsatz % | DMCS-Sel. % | MDCS-Sel. % | TMCS-Sel. % |
|---|---|---|---|
| 14,8 | 27,2 | 49,5 | 20,0 |

## Patentansprüche

1. Verfahren zur Herstellung von Alkylhydrogenchlorsilanen der allgemeinen Formel I
R₍₄₋ₙ₋ₘ₎ Si Clₙ Hₘ (I),
wobei m gleich 1 oder 2 und n gleich 1 oder 2 und m + n ≤ 3 ist und R eine Alkylgruppe mit 1 bis 5 Kohlenstoffatomen bedeutet, in dem Alkylchlorsilane der allgemeinen Formel II
R₍₄₋ₚ₎ Si Clₚ (II),
wobei p gleich 1 oder 2 oder 3 ist,
mit Wasserstoff in Gegenwart eines Katalysators umgesetzt und die Alkylhydrogenchlorsilane aus dem Reaktionsprodukt gewonnen werden,
**dadurch gekennzeichnet,**
**daß** man die Alkylchlorsilane der allgemeinen Formel II an mindestens einem Metall aus der Reihe Eisen, Kobalt, Ruthenium, Rhodium, Palladium, Osmium, Iridium und Platin als geträgertem Katalysator mit Wasserstoff umsetzt.

2. Verfahren nach Anspruch 1,
**dadurch gekennzeichnet,**
**daß** die Alkylchlorsilane der allgemeinen Formel II an Ruthenium undloder Rhodium und/oder Palladium und/oder Platin als Katalysator mit Wasserstoff umgesetzt werden.

3. Verfahren nach Anspruch 2,
**dadurch gekennzeichnet,**
**daß** der Katalysatorträger Aktivkohle und/oder Oxide des Aluminiums und/oder des Titans und/oder des Siliziums enthält.

4. Verfahren nach den Ansprüchen 1 bis 3,
**dadurch gekennzeichnet,**
**daß** die Alkylhydrogenchlorsilane der allgemeinen Formel I aus dem Reaktionsprodukt destillativ abgetrennt werden.

5. Verfahren nach den Ansprüchen 1 und 4,
**dadurch gekennzeichnet,**
**daß** die Alkylchlorsilane der allgemeinen Formel II in der Gasphase katalytisch mit Wasserstoff umgesetzt werden.

6. Verfahren nach den Ansprüchen 1 bis 5,
**dadurch gekennzeichnet,**
**daß** die Alkylchlorsilane der allgemeinen Formel II bei Temperaturen von 100 bis 600 °C katalytisch mit Wasserstoff umgesetzt werden.

7. Verfahren nach den Ansprüchen 1 bis 6,
**dadurch gekennzeichnet,**
**daß** die Alkytchlorsilane der allgemeinen Formel II bei Drücken von 1 bis 50 bar abs. katalytisch mit Wasserstoff umgesetzt werden.

8. Verfahren nach den Ansprüchen 1 bis 7,
**dadurch gekennzeichnet,**
**daß** bei der Umsetzung das Molverhältnis von Wasserstoff zu Alkylchlorsilanen der allgemeinen Formel II 1 : 1 bis 100:1 beträgt.

9. Verfahren nach den Ansprüchen 1 bis 8,
**dadurch gekennzeichnet,**
**daß** bei der Umsetzung die Raumgeschwindigkeit (GHSV), bezogen auf Wasserstoff, zwischen 10 und 10 000 h⁻¹ liegt.

10. Verfahren nach den Ansprüchen 1 bis 9,
**dadurch gekennzeichnet,**
**daß** Dimethyldichlorsilan katalytisch mit Wasserstoff umgesetzt wird und das Dimethylchlorsilan und/oder das Methyldichlorsilan aus dem Reaktionsprodukt gewonnen werden.

## Claims

1. A process for preparing an alkylhydrogenchlorosilane of the general formula I
R₍₄₋ₙ₋ₘ₎ Si Clₙ Hₘ (>I),
where m is equal to 1 or 2 and n is equal to 1 or 2 and m + n ≤ 3 and R is an alkyl group having from 1 to 5 carbon atoms, in which an alkylchlorosilane of the general formula II
R₍₄₋ₚ₎ Si Clₚ (II),
where p is equal to 1 or 2 or 3,
is reacted with hydrogen in the presence of a catalyst and the alkylhydrogenchlorosilane is isolated from the reaction product,
**characterized in that** the alkylchlorosilane of the general formula II is reacted with hydrogen over at least one metal from the series comprising iron, cobalt, ruthenium, rhodium, palladium, osmium, iridium and platinum as supported catalyst.

2. A process according to claim 1,
**characterized in that** the alkylchlorosilane of the general formula II is reacted with hydrogen over ruthenium and/or rhodium and/or palladium and/or platinum as catalyst.

3. A process according to claim 2,
**characterized in that** the catalyst support contains activated carbon and/or oxides of aluminium and/or of titanium and/or of silicon.

4. A process according to any of claims 1 to 3,
**characterized in that** the alkylhydrogenchlorosilane of the general formula I is separated from the reaction product by distillation.

5. A process according to either of claims 1 and 4,
**characterized in that** the alkylchlorosilane of the general formula II is reacted catalytically in the gas phase with hydrogen.

6. A process according to any of claims 1 to 5,
**characterized in that** the alkylchlorosilane of the general formula II is reacted catalytically with hydrogen at temperatures of from 100 to 600°C.

7. A process according to any of claims 1 to 6,
**characterized in that** the alkylchlorosilane of the general formula II is reacted catalytically with hydrogen at pressures of from 1 to 50 bar abs.

8. A process according to any of claims 1 to 7,
**characterized in that** in the reaction the molar ratio of hydrogen to alkylchlorosilane of the general formula II is from 1 : 1 to 100 : 1.

9. A process according to any of claims 1 to 8,
**characterized in that** in the reaction the space velocity (GHSV), based on hydrogen, is between 10 and 10,000 h⁻¹.

10. A process according to any of claims 1 to 9,
**characterized in that** dimethyldichlorosilane is reacted catalytically with hydrogen and the dimethylchlorosilane and/or the methyldichlorosilane are isolated from the reaction product.

## Revendications

1. Procédé de préparation d'alkylhydrogénochlorosilanes de formule générale I,
R₍₄₋ₙ₋ₘ₎ Si Clₙ Hₘ (I)
dans laquelle m est égal à 1 ou 2, n est égal à 1 ou 2, m + n ≤ 3, et R signifie un groupe alkyle ayant de 1 à 5 atomes de carbone, dans lequel des alkylchlorosilanes de formule générale II,
R₍₄₋ₚ₎ Si Clₚ (II)
dans laquelle p est égal à 1 ou 2 ou 3, est mis à réagir avec de l'hydrogène en présence d'un catalyseur et les alkylhydrogénochlorosilanes sont récupérés du produit réactionnel,
**caractérisé en ce qu'**
on fait réagir les alkylchlorosilanes de formule générale II sur au moins un métal choisi dans la série du fer, du cobalt, du ruthénium, du rhodium, du palladium, de l'osmium, de l'iridium et du platine en tant que catalyseur sur support, avec de l'hydrogène.

2. Procédé selon la revendication 1,
**caractérisé en ce que**
les alkylchlorosilanes de formule générale II sont mis à réagir avec l'hydrogène sur du ruthénium et/ou du rhodium et/ou du palladium et/ou du platine comme catalyseur.

3. Procédé selon la revendication 2,
**caractérisé en ce que**
le support du catalyseur contient du charbon activé et/ou des oxydes d'aluminium et/ou du titane et/ou du silicium.

4. Procédé selon l'une quelconque des revendications 1 à 3,
**caractérisé en ce que**
les alkylhydrogénochlorosilanes de formule générale I, sont séparés du produit réactionnel par distillation.

5. Procédé selon l'une quelconque des revendications 1 à 4,
**caractérisé en ce que**
les alkylchlorosilanes de formule générale II sont mis à réagir avec l'hydrogène dans la phase gazeuse d'une manière catalytique.

6. Procédé selon l'une quelconque des revendications 1 à 5,
**caractérisé en ce que**
les alkylchlorosilanes de formule générale II sont mis à réagir catalytiquement avec l'hydrogène à des températures allant de 100 à 600°C.

7. Procédé selon l'une quelconque des revendications 1 à 6,
**caractérisé en ce que**
les alkylchlorosilanes de formule générale II sont mis à réagir catalytiquement avec l'hydrogène à des pressions allant de 1 à 50 bars abs.

8. Procédé selon l'une quelconque des revendications 1 à 7,
**caractérisé en ce que**
dans la réaction, le rapport molaire de l'hydrogène à l'alkylchlorosilane de formule générale II s'élève de 1 : 1 à 100 : 1.

9. Procédé selon l'une quelconque des revendications 1 à 8,
**caractérisé en ce que**
dans la réaction la vitesse spatiale (GHSV) rapportée à l'hydrogène, se situe entre 10 et 10.000 h⁻¹.

10. Procédé selon l'une quelconque des revendications 1 à 9,
**caractérisé en ce que**
le diméthyldichlorosilane est mis à réagir catalytiquement et le diméthylchlorosilane et/ou le méthyldichlorosilane sont récupérés du produit réactionnel.
